# EUROPEAN PATENT APPLICATION

(11) **EP 2 039 423 A1**
(43) Date of publication of application: **25.03.2009**
(21) Application number: 07744754.8
(22) Date of filing: 30.05.2007
(51) Int. Cl.: B01J 20/18

(54) **ADSORBENT FOR EXHAUST GAS**

(30) Priority: 13.06.2006 JP 2006163787
(71) Applicant: Toyota Jidosha Kabushiki Kaisha, Toyota-shi, Aichi 471-8571 (JP)
(72) Inventor: KANAZAWA, Takaaki, Toyota-shi, Aichi 471-8571 (JP)
(74) Representative: Kuhnen & Wacker
(86) International application number: PCT/JP2007/061409
(87) International publication number: WO 2007/145104

(57) **Abstract**

An adsorbent for exhaust gas in accordance with the present invention is produced by mixing a base material with an additive, in which the base material containing Fe-ZSM-5 is obtained by Fe ion exchange of ZSM-5 having an Si/Al₂O₃ molar ratio of 28 (the number of moles of Si : the number of moles of Al₂O₃ = 28:1), and in which the additive contains at least one selected from Y-zeolite having an Si/Al₂O₃ molar ratio of 250, mordenite having an Si/Al₂O₃ molar ratio of 200, and β-zeolite having an Si/Al₂O₃ molar ratio of 400. The adsorbent can adsorb both hydrocarbons and nitrogen oxides simultaneously effectively.

## Description

### Technical Field

The present invention relates to adsorbents for treating exhaust gases from automobile engines or the like, adsorbing carbon monoxide (CO), unburned hydrocarbons (HC) and nitrogen oxides (NOₓ).

### Background Art

Conventionally, it is well known that an apparatus for exhaust gas treatment, which comprises a carrier supporting a catalyst consisting of a noble metal, such as platinum (Pt) or rhodium (Rh). In this apparatus, the catalyst contacts the exhaust gas for decomposition of carbon monoxide, hydrocarbons and nitrogen oxides (hereinafter called 'target substances').

Recently, the automobile emissions control has tended to be more restricted, so that industry requires an improvement in performance for treating exhaust gas. To improve the performance is, for example, to enlarge the surface area of the carrier, to make the noble metals in fine particulate form (to enlarge the surface area of the noble metals), to disperse uniformly the noble metals deposited on the carrier, or combination of these.

Particularly, to get better fuel economy, the automobile engine tends to run in a lean burn control, in which the air/fuel ratio is high. So, it is required to provide the apparatus for treating the exhaust gas, containing a number of nitrogen oxides, under the lean burn control.

The apparatus for treating the exhaust gas is requested to improve the treating performance when the temperature of the apparatus is not high enough (e.g. when starting the automobile engine).

When the temperature of the apparatus does not become sufficiently high, the temperature of the catalyst is still low (about 200 degrees C), and the catalytic activity is insufficient; as a result, the treating performance is lowered.

Accordingly, utilizing the conventional apparatus for treating the exhaust gas, the target substances (carbon monoxide, unburned hydrocarbons and nitrogen oxides) are more contained in the exhaust gas when starting the engine than when the catalyst is active enough.

The conventional art which solves the above-mentioned problems is disclosed in JP-A-2003-326137, JP-A-2004-978, JP-A-H7-80315 or JP-A-2001-526586.

In the conventional art, the apparatus for exhaust gas treatment comprises the carrier which supports catalyst by utilizing a zeolite having ability of adsorbing the target substances (carbon monoxide, unburned hydrocarbons and nitrogen oxides). Alternatively, such a conventional apparatus comprises the carrier on which a coating layer containing the zeolite is coated. Thus, the zeolite adsorbs the target substances temporarily when the apparatus is not in sufficiently high temperature, and the catalyst treats the target substances when the apparatus is in high temperature.

In an alternative conventional art which solves the above-mentioned problems, a carrier on which the zeolite is coated, that is, an adsorbent is disposed in the upstream side of the apparatus (i.e. the near side of the engine). The zeolite adsorbs the target substances temporarily when the apparatus is not in sufficiently high temperature. Thus, it can be prevented from exhausting the target substances without treatment by the apparatus.

However, the above-mentioned conventional arts include the problems as follows.

Generally, the term 'zeolite' indicates an aluminosilicate having a micro-porous structure in a crystal thereof and an aluminosilicate in which, for a part of aluminum or silicon element, another metallic element is substituted, and so on. There are several zeolites each having a different characteristic due to the crystal structure, the size of the micro pores in the crystal, the type of the metallic element substitution or the like. So, the each zeolite has a different ability of adsorbing the target substances contained in the exhaust gas. Consequently, it is required to use the zeolite as the adsorbent which has a suitable ability of adsorbing each of the target substances (carbon monoxide, hydrocarbons, nitrogen oxides and the like).

In the zeolite-type, Pd/CeO₂-type or Pd/Co₃O₄-type adsorbent, hydrocarbons of the target substances tends to poison the adsorbents with respect to the ability for adsorbing carbon monoxide and nitrogen oxides (that is, to lower the ability of the adsorbents for adsorbing).

Due to the above-described reason, provided an adsorbent for adsorbing hydrocarbons in addition to an adsorbent for adsorbing carbon monoxide and nitrogen oxides, and the adsorbent for hydrocarbons is disposed in the upstream side of the adsorbent for carbon monoxide and nitrogen oxides. In this case, these adsorbents occupy a larger volume, and it is difficult to downsize the apparatus for exhaust gas treatment.

The objective of the present invention is to provide an adsorbent for adsorbing the any target substances simultaneously effectively.

### Disclosure of Invention

### Means of Solving the Problems

The means of solving the above-mentioned problems are described below.

An adsorbent for exhaust gas in accordance with the present invention is produced by mixing a base material with an additive, in which the base material contains Fe-ZSM-5 and in which the additive contains at least one selected from Y-zeolite, mordenite and β-zeolite.

With respect to the adsorbent, the mixture proportion of the additive is preferably not lower than 1 wt% and not higher than 20 wt%.

It is advantageous that the Fe-ZSM-5 is obtained by Fe ion exchange of ZSM-5 having an Si /Al₂O₃ molar ratio of 28.

ZSM-5, Y-zeolite, mordenite and β-zeolite are both one of zeolites.

The term 'zeolite' indicates an aluminosilicate having a micro-porous structure in a crystal thereof and an aluminosilicate in which, for a part of aluminum or silicon element, another metallic element is substituted, and so on.

The term 'Fe-ZSM-5' indicates a product obtained by Fe ion exchange of ZSM-5.

Advantageously, Fe-ZSM-5 in accordance with the present invention is obtained Fe ion exchange of ZSM-5 having an Si/Al₂O₃ molar ratio of 28 (the number of moles of Si : the number of moles of Al₂O₃ = 28 : 1). If the target material of Fe ion exchange contains less number of moles of Si, the number of moles of Fe becomes larger contained in Fe-ZSM-5, which improves the adsorption ability (in particular, for nitrogen oxides).

In one embodiment, an additive contains one selected from Y-zeolite, mordenite or β-zeolite. In an alternative embodiment, such an additive contains two or more selected from Y-zeolite, mordenite and β-zeolite.

If the mixture proportion of the additive is lower than 1 wt%, the ability for adsorbing hydrocarbons is degraded. Preferably, that is not lower than 1 wt%.

If the mixture proportion of the additive is higher than 20 wt %, the ability for adsorbing nitrogen oxides is degraded, as the mixture proportion of the base material is lowered. Preferably, the mixture proportion of the additive is not higher than 20 wt%.

The adsorbent in accordance with the present invention has ability for adsorbing the any target substances simultaneously effectively.

### Brief Description of Drawings

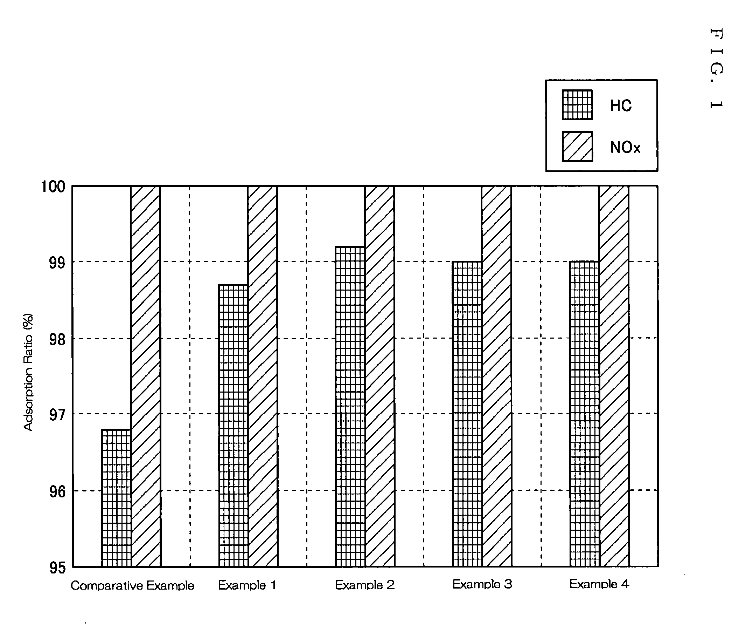

FIG. 1 shows experimental results of examples of adsorbents for exhaust gas treatment in accordance with the present invention.

### The Best Mode for Carrying Out the Invention

Examples 1 to 4 and Comparative Example are described below. Examples 1 to 4 are embodiments of the present invention. Comparative Example is an embodiment of conventional absorbent.

Examples 1 to 4 and Comparative Example are produced as following steps.

In the first step, Fe-ZMS-5 is prepared as a base material by Fe ion exchange of ZSM-5 having an Si/Al₂O₃ molar ratio of 28 (the number of moles of Si : the number of moles of Al₂O₃ = 28 : 1).

Y-zeolite having an Si/Al₂O₃ molar ratio of 250, mordenite having an Si/Al₂O₃ molar ratio of 200, and β-zeolite having an Si/Al₂O₃ molar ratio of 400 are prepared as an additive.

In the second step, mixing the base material and the additives results in production of zeolite powders corresponding to Examples 1 to 4 and Comparative Example, respectively.

Mixing the Fe-ZSM-5 with the Y-zeolite produces the zeolite powder in accordance with Example 1. The zeolite powder of Example 1 weighs 200 g and the mixture proportion thereof to the additive (= additive / (base material + additive) * 100) is 1 wt%.

Mixing the Fe-ZSM-5 with the Y-zeolite produces the zeolite powder in accordance with Example 2. The zeolite powder of Example 2 weighs 200 g and the mixture proportion thereof to the additive is 5 wt%.

Mixing the Fe-ZSM-5 with the mordenite produces the zeolite powder in accordance with Example 3. The zeolite powder of Example 3 weighs 200 g and the mixture proportion thereof to the additive is 5 wt%.

Mixing the Fe-ZSM-5 with the β-zeolite produces the zeolite powder in accordance with Example 4. The zeolite powder of Example 4 weighs 200 g and the mixture proportion thereof to the additive is 5 wt%.

The powder of Comparative Example consists of the Fe-ZSM-5. The zeolite powder of Comparative Example weighs 200 g.

In the third step, the five powders are mixed with silicasol and pure water, which results in a production of slurry-form coating materials corresponding to Examples 1 to 4 and Comparative Example, respectively. The mixture ratio (weight ratio) between the powders, silicasol and pure water is represented as follows; powders : silicasol : pure water = 100 : 35 : 90.

In the forth step, the five coating materials are coated on 1000 cc of monoliths respectively. The monoliths are dried for 2 hours at 120 degrees C, and baked for 2 hours at 500 degrees C. The production of Examples 1 to 4 and Comparative Example is completed.

A method for carrying out the experiment for adsorption of Examples 1 to 4 and Comparative Example is described below.
1. Preparing an automobile including an engine with engine displacement of 2400 cc,
   in which Example 1 is disposed at the upstream side of a catalytic converter (the near side of the engine) and at the midway of an exhaust pipe.
2. Starting the engine and keep running for 20 seconds, and detecting, during the engine running, the concentrations of hydrocarbons and nitrogen oxides contained in the exhaust gas which is flowed through Example 1.
3. Calculating the adsorption ratios (%) of Example 1 for hydrocarbons and nitrogen oxides according to the detected concentrations.

The adsorption ratio (%) for hydrocarbons (or nitrogen oxides) is calculated by utilizing a calculation formula: ((A-B) / A) * 100. In this formula, the 'A' represents an weight of hydrocarbons (or nitrogen oxides) calculated on the basis of the detected concentration of hydrocarbons except for methane (or nitrogen oxides) included in the exhaust gas, which does not pass through the adsorbent. The 'B' represents an weight of hydrocarbons (or nitrogen oxides) calculated on the basis of the detected concentration of hydrocarbons except for methane (or nitrogen oxides) included in the exhaust gas, which passes through Example 1.

The above-mentioned method is carried out for Examples 2 to 4 and Comparative Example for calculation of the adsorption ratios (%) of Examples 2 to 4 and Comparative Example for hydrocarbons and nitrogen oxides.

The results of the experiment for adsorption are described below, referring FIG. 1.

All of the adsorption ratios for nitrogen oxides of Example 1 to 4 and Comparative Example are 100 %. This shows the adsorption performances for nitrogen oxides of Example 1 to 4 and Comparative Example are high.

Considering the adsorption ratio of Comparative Example is 100 %, it is obvious that the Fe-ZSM-5, which is the base material of the adsorbents, has a fine performance for adsorbing nitrogen oxides. Further, considering the adsorption ratios of Examples 1 to 4 are 100 %, it is obvious that the mixture of the additives with the base material does not lower the performance for adsorbing nitrogen oxides.

The adsorption ratio for hydrocarbons of Comparative Example is 96.8 %. The adsorption ratios for hydrocarbons of Examples 1 to 4 are 98.7, 99.2, 99.0, 99.0 %, respectively. Examples 1 to 4 are both show the better performance for adsorbing hydrocarbons than Comparative Example.

Considering Examples 1 to 4 are different from Comparative Example in mixing the additives, it is obvious that the mixture, of the additives (at least one selected from Y-zeolite, mordenite and β-zeolite) with the base material, improves the adsorption performance for hydrocarbons.

Additionally, in the experiments, the type of hydrocarbons in the exhaust gas is analyzed with a gas chromatography. The exhaust gas through Comparative Example includes methane, ethane and isooctane. The exhaust gases through Examples 1 to 4 include methane and ethane, except for isooctane. Accordingly, it is obvious to show 100 %, the adsorption ratios of Example 1 to 4 for hydrocarbons that have larger molar weight than ethane.

Examples 1 to 4 are produced by mixing the base material containing Fe-ZSM-5 with the additive containing at least one selected from the group consisting of Y-zeolite, mordenite and β-zeolite.

Due to the above-mentioned structure, Examples 1 to 4 has ability for adsorbing the any target substances simultaneously effectively.

In particular, when the temperature of catalytic converter is not sufficiently high, for example, when starting the engine, both of hydrocarbons and nitrogen oxides are adsorbed not to exhaust outside. Therefore, the exhaust gas becomes cleaner.

Furthermore, the adsorbent for adsorbing hydrocarbon and that for adsorbing nitrogen oxides can be structure in one body. Therefore, the adsorbent for exhaust gas treatment is downsized.

In Examples 1 to 4, the mixture proportion of the additive to the adsorbent is not lower than 1 wt% and is not higher than 20 wt%.

Due to the above-mentioned structure, maintaining the ability for adsorbing nitrogen oxides, the ability for adsorbing hydrocarbons is improved.

In particular, the exhaust gas, from the engine under the lean burn control, can be cleaner.

In Examples 1 to 4, the Fe-ZSM-5 is obtained by Fe ion exchange of ZSM-5 having an Si/Al₂O₃ molar ratio of 28.

Due to the above-mentioned structure, Fe-ZSM-5 contains more number of moles of Fe. Therefore, the ability for adsorbing both hydrocarbons and nitrogen oxides is improved.

### Industrial Applicability

The present invention can be suitably applicable to treating the exhaust gas from the automobile engine or the like, and further, to adsorbing hydrocarbons (HC) and nitrogen oxides (NOₓ) in gases for separating them from the gases.

## Claims

1. An adsorbent for exhaust gas, comprising:
a base material, containing a Fe-ZSM-5; and
an additive, containing at least one selected from Y-zeolite, mordenite and β-zeolite,
wherein the adsorbent is produced by mixing the base material with the additive.

2. The adsorbent according to claim 1,
wherein the mixture proportion of the additive to the adsorbent is not lower than 1 wt% and is not higher than 20 wt%.

3. The adsorbent according to claim 1 or 2,
wherein the Fe-ZSM-5 is obtained by Fe ion exchange of ZSM-5 having an Si/Al₂O₃ molar ratio of 28.
